# EUROPEAN PATENT APPLICATION

(11) **EP 1 602 469 A1**
(43) Date of publication of application: **07.12.2005**
(21) Application number: 04102533.9
(22) Date of filing: 04.06.2004
(51) Int. Cl.: B29C 70/02, B29C 70/50, B29C 70/88

(54) **A textile product comprising metal cords and non-metallic fibers, and a semifinished sheet comprising such textile product**

(71) Applicant: N.V. BEKAERT S.A., 8550 Zwevegem (BE); Quadrant Plastic Composites AG, 5600 Lenzburg (CH)
(72) Inventor: BRENTRUP, Karl-Ludwig, 5103, MÖRIKEN (CH); DITTMAR, Harri, 5064, WITTNAU (CH); LOKERE, Erwin, 8500, KORTRIJK (BE); GALLENS, Jeroen, 8500, KORTRIJK (BE)

(57) **Abstract**

A textile product as subject of the invention comprises at least one layer of non-metallic fibers and metal cords. The textile fabric is characterized in that the metal cords are bond to this layer of non-metallic fibers by means of stitches.

## Description

### Field of the invention.

The invention relates to a textile product comprising metal cords and non-metallic fibers, and to a semifinished sheet comprising such textile product, which sheet may be molded into high impact resistant parts.

### Background of the invention.

Impact resistant molded parts, for example bumper beams, are usually made by molding semifinished sheets comprising a thermoplastic polymer matrix and reinforcing fibers, especially unidirectional glass fiber roving or glass fiber woven fabrics. It has turned out, however, that in many cases such parts are not sufficiently impact resistant, especially at high speeds.

Attempts have been made to introduce into molded parts additional reinforcements, for example metal elements such as steel cords.

US 5,290,079 describes a bumper beam, the walls of which are formed from a thermoplastic resin having encapsulated glass fibers, and optionally containing a reinforcing web of ductile metal strands. Such bumper beams require the provision of an expensive two dimensional metal grid.

Similarly, WO 03/ 076 234 A1 describes an impact beam comprising a polymer matrix and metal cords. The polymer matrix may contain glass fibers which can be random, chopped, unidirectional, even present as a woven fabric, or a combination of those. In a preferred embodiment a polymer matrix sheet and metal cords or cord tapes are directly molded together to form the impact beam.

US 2002/0182961 A1 describes a fabric comprising steel cords and a thermoplastic polymer material, and optionally further comprising glass fibers. In one embodiment the steel cords in the fabric are arranged parallel. Shaped articles can be made from such fabric for example by a press forming process.

It has turned out, however, that in press forming processes, parallel steel cords become distorted so that they lose their parallel arrangement, or migrate along with the flowing polymer to positions in the produced polymer article, where the presence of the cords was not intended. This migration and distortion results in drastically decreased mechanical properties of the shaped article. The uncontrolled flow of the steel cords further leads to parts with very low production consistency, which does not allow the use of such parts for an industrial mass production.

### Summary of the invention.

It is a subject of the present invention to provide a textile product comprising metal cords and non-metallic fibers which overcomes the disadvantages of prior art. It is a subject of the present invention to provide a textile product which, when used as reinforcing element of a press molded polymer article, reduces or solves the problem of migration of the cords during pressing.

It is further a subject of the present invention to provide a semifinished sheet comprising textile product comprising metal cords and non-metallic fibers which overcomes the disadvantages of prior art. It is a subject of the present invention to provide a semifinished sheet comprising a textile product, which sheet when used as reinforcing element of a press molded polymer article, reduces or solves the problem of migration of the cords during pressing.

A textile product as subject of the invention comprises metal cords and at least one layer of non-metallic fibers. The textile product is characterized in that the metal cords are bond to this layer of non-metallic fibers by means of stitches.
The stitches may be provided by sewing the cords to the layer of non-metallic fibers, e.g. by using embroidering processes. Alternatively the stitches may be provided by knitting through the layer of non-metallic fibers, e.g. as when one use the Malimo- or Arachne production processes.
The layer of non-metallic fibers may be a woven, non-woven or knitted fabric of non-metallic fibers.
Alternatively, essentially parallel bundles of fiber roving or tapes or tows of essentially parallel non-metallic fibers may be used as a layer of essentially parallel fibers replacing the nonwoven or other textile fabric in an Arachne-process.

The term "textile fabric" is to be understood as a manufactured essentially planar structure made of fibers and/or yarns assembled by various means such as weaving, knitting, tufting, felting, braiding, or bonding of webs to give the structure sufficient strength and other properties required for its intended use.
The term "textile product" is to be understood as a combination of one or more textile fabrics and/or yarns, which are mechanically and/or chemically connected to each other, but which product has properties similar to properties of textile fabrics.

Possibly, additional bundles of fiber roving, the tapes or tows of essentially parallel non-metallic fibers may be linearly mixed with the metal cords. This mix of non-metallic fibers and metal cords are stitched or knitted to at least one layer of non-metallic fibers.

Alternatively, bundles of fiber roving, the tapes or tows of essentially parallel non-metallic fibers, providing the at least one layer of non-metallic fibers in the textile product, may be crosswise bonded to the metal cords. As an example the orientation of the metal cords may differ 90° of the orientation of the bundles of fiber roving, the tapes or tows of essentially parallel non-metallic fibers. Possibly, additional bundles of fiber roving, the tapes or tows of essentially parallel non-metallic fibers may be linearly mixed with the metal cords, which mix is then crosswise bonded to the bundles of fiber roving, the tapes or tows of essentially parallel non-metallic fibers of the layer or layers of non-metallic fibers.

As an example, the metal cords my be provided as warp and/or weft inlay in a warp knitted textile fabric, being the textile product as subject of the invention .
The non-metallic fiber layer may be provided as essentially parallel bundles of fiber roving or tapes or tows of essentially parallel non-metallic fibers, provided as inlay in the direction perpendicular to the metal cords in this warp knitted fabric.

A textile product as subject of the invention has as an advantage that, when it is used to provide a polymer article comprising such textile product, the metal cords are held in place during the press molding process. They don't tend to distort or migrate along with the molten polymer material.

The metal cords may be present all essentially parallel to each other, or as two or more groups of metal cords, all cords of a group being essentially parallel to each other. The metal cords of the first group may be inclined in regard to the metal cords of the second group over an angle **θ**, which is preferably in the range of 10 to 170°, such as, as an example 90°.

The metal cord preferably used for an impact beam as subject of the invention, are of a type which can absorb relatively high amounts of impact energy but also other metal cords may be used.

Examples here are:
- multi-strand metal cords e.g. of the m x n type, i.e. metal cords, comprising m strands with each n wires, such as 4×7×0.10 or 3x3x0.18 ; the last number is the diameter of each wire, expressed in mm.
- compact cords, e.g. of the 1 x n type, i.e. metal cords comprising n metal wires, n being greater than 8, twisted in only one direction with one single step to a compact cross-section, such as 1x9x0.18 or 1x12x0.18; the last number is the diameter of each wire, expressed in mm.
- layered metal cords e.g. of the I + m (+ n) type, i.e. metal cords with a core of I wires, surrounded by a layer of m wires, and possibly also surrounded by another layer of n wires , such as 2+4x0.18; the last number is the diameter of each wire, expressed in mm.
- single strand metal cords e.g. of the 1 x m type, i.e. metal cords comprising m metal wires, m ranging from two to six, twisted in one single step, such as 1x4x0.25; the last number is the diameter of each wire, expressed in mm.
- Open metal cords e.g. of the m+n type, i.e. metal cords with m parallel metal wires surrounded by n metal wires, such as disclosed in US-A-4408444, e.g. a metal cord 2+2x0.25; the last number is the diameter of each wire, expressed in mm.
All cords as described above can be equipped with one or more spiral wrapped wires to increase the mechanical bond of the cords in the polymer matrix, and/or to bundle the n single parallel crimped or non-crimped but plastically deformed wires if the cord is provided using such parallel wires.
Preferably however, the metal cord used in the context of the present invention may be a metal cord with a high elongation at fracture, i.e. an elongation exceeding 4 %, e.g. an elongation between 5% and 10%. High elongation metal cord has more capacity to absorb energy.
Such a metal cord is:
- either a high-elongation or elongation metal cord (HE-cords), i.e. a multi-strand or single strand metal cord with a high degree of twisting (in case of multi-strand metal cords : the direction of twisting in the strand is equal to the direction of twisting of the strands in the cord : SS or ZZ, this is the so-called Lang's Lay) in order to obtain an elastic cord with the required degree of springy potential ; an example is a 3x7x0.22 High Elongation metal cord with lay lengths 4.5 mm and 8 mm in SS direction;
- or a metal cord which has been subjected to a stress-relieving treatment such as disclosed in EP-A1-0 790 349 ; an example is a 2×0.33 + 6×0.33 SS cord.
- as an alternative or in addition to a high elongation metal cord, the metal cord may be composed of one or more wires which have been plastically deformed so that they are wavy. This wavy nature additionally increases the elongation. An example of a wavy pattern is a helix or a spatial crimp such as disclosed in WO-A1-99/28547.

According to the required properties of the impact beam as subject of the invention, all metal cords may be identical, or alternatively, different metal cords may be used to provide the impact beam.

The metal elements used to provide these metal cords may have a diameter, being a diameter of a radial cross section of the metal elements, which is equal or larger than 100µm, more preferred larger than 125µm e.g. more than 150µm or even more than 175µm. All metal elements of a metal cord may have the same diameter, or the diameters of the metal elements may differ from each other.
Preferably, the optical diameter of the metal cord is larger than 200µm, or even larger than 250µm, such as larger than 300µm or more. The optical diameter of the metal cord is to be understood as the diameter of the smallest imaginary circle, encompassing the radial cross section of the metal cord.

Most preferably steel cords are used to provide the impact beam as subject of the invention. Presently known steel alloys may be used to provide the steel cords. Preferably, the steel cords are subjected to a stress relieving thermal treatment, e.g. by passing the steel cord through a high-frequency or mid-frequency induction coil of a length that is adapted to the speed of the steel cord during production. It was observed that, increasing the temperature to more than 400°C for a certain period of time, a decrease in tensile strength of the steel cord (a reduction of approximately 10%), but at the same time, an increase of the plastic elongation of the cord before rupture of more than 6% may be obtained. Such steel cords are hereafter referred to as stress relieved steel cords.

Possibly, the metal cords may be coated with a polymer coating layer, such as a layer out of e.g. polyolefin, polyamide fiber, thermoplastic polyester, polycarbonate, polyacetal, polysulfone, polyether ketone, polyimide or polyether imide.

The non-metallic fibers are preferably glass fibers, poly-aramide fibers, poly(p-phenylene-2,6-benzobisoxazole) fibers, carbon fibers, mineral fibers such as basalt fibers or natural fibers such as flax or hemp. The non-metallic fibers may be mixed with polymer fibers like polyolefin fibers, polyamide fibers, thermoplastic polyester fibers , polycarbonate fibers, polyacetal fibers, polysulfone fibers, polyether ketone fibers , polyimide fibers or polyether imide fibers.
The non-metallic fibers may be mixed with polymer fibers like polyolefin fibers, polyamide fibers, thermoplastic polyester fibers , polycarbonate fibers, polyacetal fibers, polysulfone fibers, polyether ketone fibers , polyimide fibers or polyether imide fibers..

The metal cords are bond to the non metallic fiber layer using a yarn, which is preferably made out of glass fibers, poly-aramide fibers, poly(p-phenylene-2,6-benzobisoxazole) fibers or thermoplastic polyester fibers or a combination of these fibers.

Possibly more than one layer of non-metallic fibers are bond to the metal cords by means of stitches. As an alternative, the textile product may comprise additional layers of fibers being laminated to the layer of non metallic fibers with metal cords stitched to it.

It is further a subject of the invention to provide a semifinished sheet comprising a polymer matrix and a textile product as subject of the invention, comprising metal cords and at least one layer of non-metallic fibers, for which the metal cords are bond to this at least one layer of non-metallic fibers by means of stitches. The non-metallic fibers are preferably glass fibers, poly-aramide fibers, poly(p-phenylene-2,6-benzobisoxazole) fibers, carbon fibers, mineral fibers such as basalt fibers or natural fibers such as flax or hemp. The non-metallic fibers may be mixed with polymer fibers like polyolefin fibers, polyamide fibers, thermoplastic polyester fibers , polycarbonate fibers, polyacetal fibers, polysulfone fibers, polyether ketone fibers , polyimide fibers or polyether imide fibers.
For the polymer matrix all thermoplastically moldable polymers are suitable, for example polyolefins, polyamides, linear polyesters, polycarbonates, polyacetals, polysulfones, polyether ketones, polyimides and polyether imides. Especially preferred are propylene polymers having a melt index MFI (2.16kg/210°C) between 20 and 300 g/10min, preferably homopolypropylene and graft copolymers of propylene and maleic anhydride or acrylic acid. The same applies to the thermoplastic polymers in the commingled fibers and hybrid fabrics.

This polymer matrix may be provided to the textile product by means of melt impregnation using a double belt process. The textile product is laminated at a temperature preferably above the melting temperature of the used polymer matrix to obtain a full impregnation of the reinforcing fibers, being the metal cords and non metallic fibers.
As an alternative, especially for polymer matrices being thermoplastics with a high melt viscosity or a low thermo-stability under oxygen, the polymer matrix can be introduced as fibers out of polymer matrix material, being mixed with the non metallic fibers and/or the metal cords. The mixing can be done by commingling of fibers out of polymer matrix material and the non metallic fibers or by weaving of hybrid fabrics out of fibers out of polymer matrix material and non mletallic fibers.
The fibers out of polymer matrix material are then being molten in the double belt press and the so obtained molten polymer matrix is then used to impregnate the non metallic fibers and the metal cords, similar to as in case of the melt extrusion process.

The textile product may be laminated with additional layers of non metallic fibers like glass fibers, poly-aramide fibers, poly(p-phenylene-2,6-benzobisoxazole) fibers, carbon fibers, mineral fibers such as basalt fibers or natural fibers such as flax or hemp. depending on the requirements of the target application. These additional layers may also comprise oriented fibers or non oriented fibers, the latter hereafter referred to as "random distribution layer".
These additional layers, possibly random distribution layers, of non metallic fibers may also be melt-impregnated or alternatively comprise fibers out of polymer matrix material out of polyolefins, polyamides, thermoplastic polyesters, polycarbonates, polyacetals, polysulfones, polyether ketones, polyimides and polyether imides, and this to the required amount as needed for the application. In this case the random distribution layers may be mixed fiber fleeces made by carding or airlay processes.

Preferably, a semifinished sheet as subject of the invention comprises a polymer matrix and a textile product comprising bundles of fiber roving, the tapes or tows of essentially parallel non-metallic fibers, providing the at least one layer of non-metallic fibers in the textile product, being crosswise bonded to the metal cords. As an example the orientation of the metal cords may differ 90° of the orientation of the bundles of fiber roving, the tapes or tows of essentially parallel non-metallic fibers. Possibly, additional bundles of fiber roving, the tapes or tows of essentially parallel non-metallic fibers may be linearly mixed with the metal cords, which mix is then crosswise bonded to the bundles of fiber roving, the tapes or tows of essentially parallel non-metallic fibers of the layer or layers of non-metallic fibers.

As an example, the metal cords my be provided as warp and/or weft inlay in a warp knitted textile fabric, being the textile product as subject of the invention .
The non-metallic fiber layer may be provided as essentially parallel bundles of fiber roving or tapes or tows of essentially parallel non-metallic fibers, provided as inlay in the direction perpendicular to the metal cords in this warp knitted fabric.

When a semifinished sheet as subject of the invention is used to provide a polymer article comprising such textile product, the metal cords are held in place during the press molding process. The don't tend to distort or migrate along with the molten polymer material. Further, the mechanical and chemical anchoring of the polymer matrix of the semifinished sheet, the metal cords and the non metallic fibers may be tuned more easily during production of the semifinished sheet as compared to the direct use of a textile product as subject of the invention in the same press molding process. The combination with other oriented or random layers in the semifinished sheet allows the production of a tailored sheet to meet the requirements of the final molded part.

### Brief description of the drawings.

The invention will now be described into more detail with reference to the accompanying drawings wherein
- FIGURE 1a and FIGURE 1b show schematically a textile fabric as subject of the invention.
- FIGURE 2a and FIGURE 2b show schematically an alternative textile fabric as subject of the invention.
- FIGURE 3a and FIGURE 3b show schematically an alternative textile fabric as subject of the invention.
- FIGURE 4, FIGURE 5, FIGURE 6 and FIGURE 7 show schematically a method to provide a semifinished sheet as subject of the invention.
- FIGURE 8 and FIGURE 9 show schematically a semifinished sheet as subject of the invention.

### Description of the preferred embodiments of the invention.

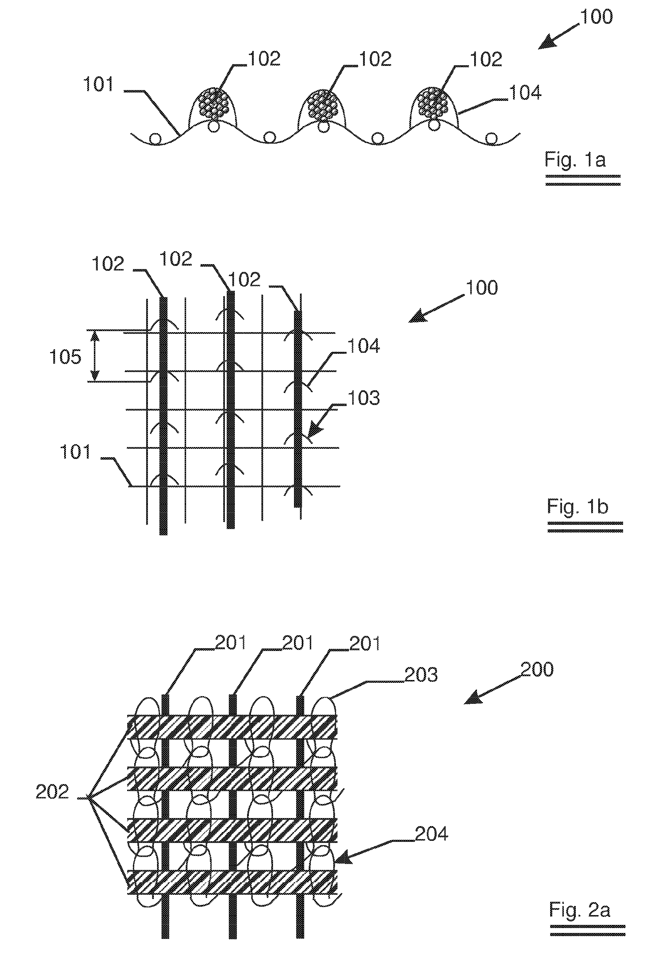

A first embodiment of a textile product 100 according to the present invention is schematically shown in FIGURE 1a and FIGURE 1 b, being a side view (FIGURE 1a) and a top view (FIGURE 1b) of the textile product 100.

A layer of non metallic fibers 101 is a woven textile fabric out of 1200 to 2400 tex glass fiber rovings, having a filament diameter of 15 to 20 µm and a weight between 200 and 2000 g/m². A PP-compatible sizing may used. As an alternative, the fiber rovings or yarns comprise PET- or aramide fibers, next to the glass fibers of the woven textile fabric. Such combination of different fibers may be provided using commingled fiber rovings, or fiber rovings used separately one from the other in the woven fabric.

The textile product 100 further comprises metal cords 102, being a compact cord of type 0.20+18x0.175. this is to be understood as a cord comprising a core wire of diameter 0.2mm, around which 18 wires of diameter 0.175mm are twisted in the most compact way, as shown in

### FIGURE 1.

The non metallic fiber layer 101 and the metal cords 102 are bond to each other by means of stitches 103, provided by sewing operation, using a sewing thread 104 being a glass fiber yarn or a PET- or aramide-fiber yarns having a fineness of 40 to 100 tex, preferably 60 to 80 tex.

The stitch length 105 may be chosen over a large range, but is preferably in the range of 2mm to 10mm , such as 4mm.

The metal cords 102 are positioned in the textile product 100 in essentially parallel arrangement. The distance between adjacent metal cords may vary in a large range, according to the required properties of the textile product 100. the distance between adjacent cords may all be identical, or may vary over the surface of the textile product 100.

As shown in FIGURE 1a and FIGURE 1b, all metal cords 102 are positioned at the same side of the non metallic fiber layer 101. As an alternative, not shown in FIGURE 1a and FIGURE 1b, some metal cords may be located at one side of the non metallic fiber layer, whereas the other metal cords are located at the opposite side of the non metallic fiber layer.

An alternative textile product as subject of the invention is shown schematically in FIGURE 2a and FIGURE 2b, being a view of the face side (FIGURE 2a) and of the technical back side (FIGURE 2b) of a warp knitted textile product 200 or a textile product obtained by an "arachne-" or "malimo-"process.

The textile product 200 comprises metal cords 201, present in the production direction or so-called warp direction of the textile product 200. in the direction perpendicular to the warp direction, glass fiber rovings 202 are present. All rovings together provide a non metallic fiber layer to the textile product 200. The stitches 203, which bond the metal cords 201 to the non metallic fiber layer are made using a stitching yarn 204 being a glass fiber yarn or a PET- or aramide-fiber yarns having a fineness of 40 to 100 tex, preferably 60 to 80 tex. It is clear that the orientation of the metal cords differs 90° from the direction of the fiber rovings 202.

The fiber rovings used for this embodiment are 1200 to 2400 tex glass fiber rovings, having a filament diameter of 15 to 20 µm. A PP-compatible sizing may used. As an alternative, the fiber rovings or yarns comprise PET- or aramide fibers, next to the glass fibers of the non metallic fiber layer 101. Such combination of different fibers may be provided using commingled fiber rovings, or fiber rovings used separately one from the other.
The metal cords for this embodiment were a yellow brass coated steel cord of type 0.2+18x0.175 compacted cord..

It is understood hat the election of the fiber roving and metal cords may differ, so providing alternative embodiments of textile products as subject of the invention, having other mechanical and physical properties..

alternatively, non metallic fiber rovings or yarns may be provided in the direction of the metal cords, by replacing some of the metal cords by such non metallic fiber rovings, or by adding additional fiber rovings to the metal cords.

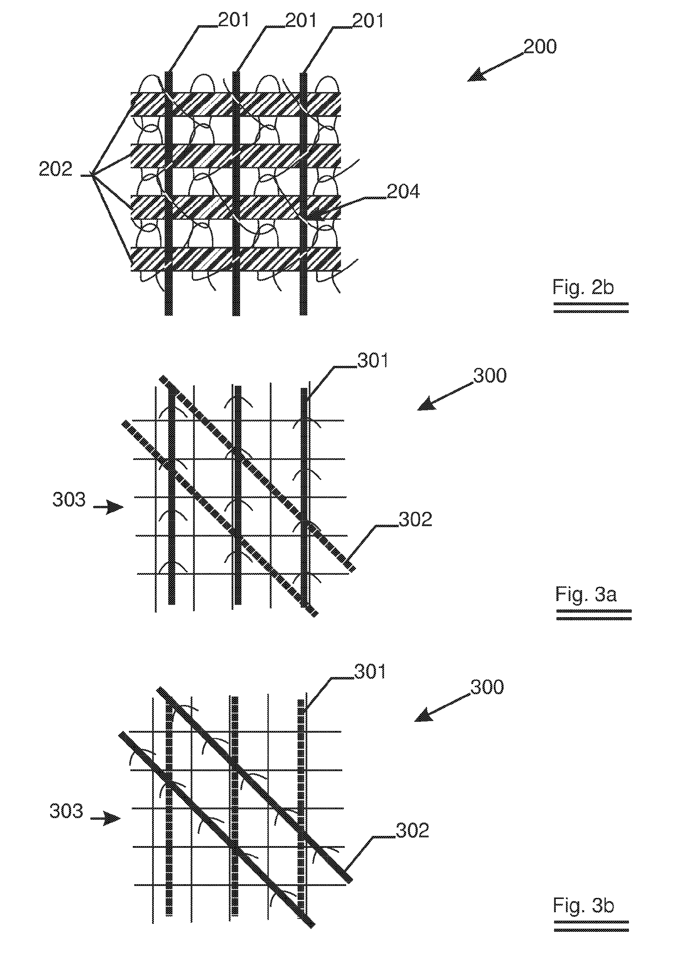

Shown schematically in FIGURE 3a and FIGURE 3b, two sides of a textile product 300 as subject of the invention are provided. To an identical combination of non metallic fiber layer and metal cord as in FIGURE 1a and FIGURE 1b, additional metal cords are provided at the second side of the textile product. The metal cords 301 present on the first side of the textile product and the metal cords 302 present on the second side of the textile product are inclined to each other over an angle **θ.** All metal cords are stitches to the layer of non metallic fibers 303 using an identical yarn as shown in FIGURE 1a and FIGURE 1b.

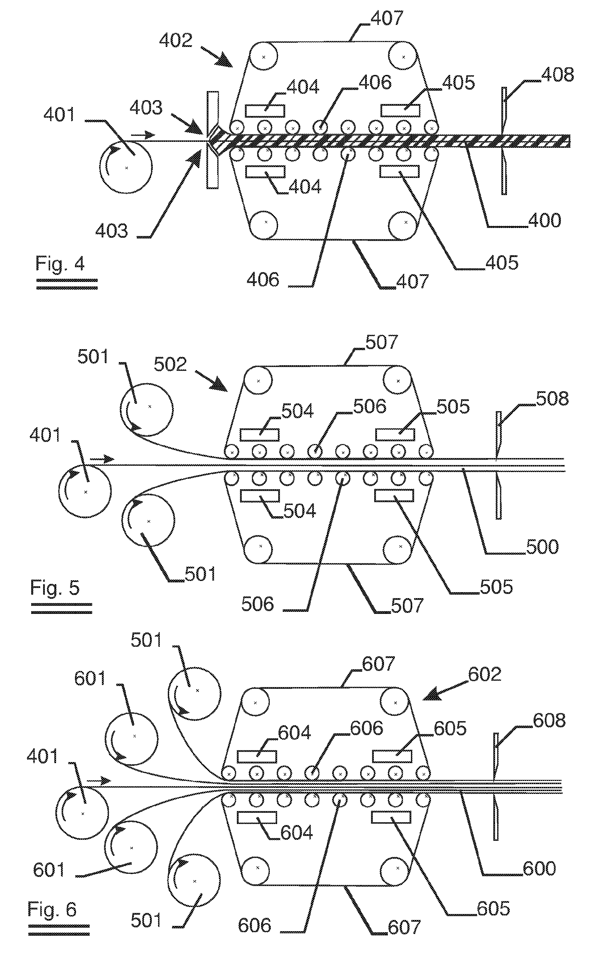

A process for providing a semifinished sheet 400 as subject of the invention is shown in FIGURE 4.

A polymer matrix 403 is provided on one or both (as shown) sides of the textile product 401 by extrusion of the polymer matrix material. This combination is provided to the double belt press 402. during pressing, the polymer matrix 403 is forces to impregnate in the textile product 401. For this purpose, the polymer matrix and textile product may be heated (indicated 404) in the first part of the process. In order to solidify the polymer matrix, the textile product impregnated with polymer matrix is cooled (indicated 405). Pressure is applied using rollers 406 and a belt 407 on both sides of the polymer matrix and textile product during operation of the double belt press. At the end of the double belt process, a semifinished sheet 400 as subject of the invention is obtained, which may be rolled on a coil or (as shown) cut into desired lengths by means of an appropriate cutting device 408.

As shown in FIGURE 5, the polymer matrix is provided to the textile product 400 as polymer tapes 501, in stead of by an extrusion operation. All other steps apply as described in FIGURE 4.

As an alternative, shown in FIGURE 6, between the textile product 401 as subject of the invention, and the polymer tapes 501, additional layers of unidirectional layers, random orientated layers or additional woven, knitted or nonwoven layers of non metallic fibers may be provided (layers indicated 601). All other steps apply as described in FIGURE 4. It is understood that these additional layers 601 may also be provided in case the polymer matrix is provided by extrusion as shown in FIGURE 4.

As a further alternative, a textile product 701 as subject of the invention comprising metal cords, non metallic fiber layer to which the metal cords are bond, and polymer matrix fibers is used to be subjected to a double pelt process 704. It is understood that additional layers of fibers (702, 703), being non metallic fibers possibly commingled with polymer matrix fibers, may be provided to the textile product 701 as subject of the invention, prior to applying the double belt pressing operation.

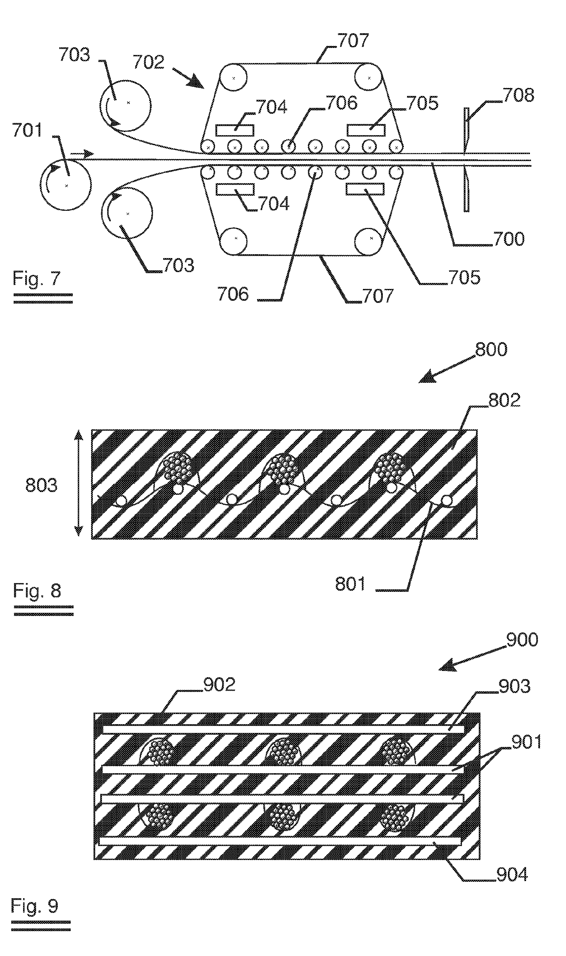

The semifinished sheet (800, 900) as subject of the invention, which may be obtained by the methods as described above, is schematically shown in FIGURE 8 and FIGURE 9.

In FIGURE 8, a transversal cut of a semifinished sheet is shown ,which comprises a textile product 801 as subject of the invention, being embedded in a layer of polymer matrix 802. The polymer matrix is preferably polypropelyne (PP), but may alternatively be polyolefins, polyamides, linear polyesters, polycarbonates, polyacetals, polysulfones, polyether ketones, polyimides or polyether imides.
The thickness 803 of the semifinished sheet is preferably in the range of 1 mm to 6mm, such as 3mm.

In FIGURE 9, a transversal cut of a semifinished sheet is shown , which comprises two textile products 901 as subject of the invention, being embedded in a layer of polymer matrix 902. Preferably the two textile products 901 are provided in such a way that similar the surfaces on which the metal cords are present, face one to the other. The polymer matrix is preferably polypropelyne (PP), but may alternatively be polyolefins, polyamides, linear polyesters, polycarbonates, polyacetals, polysulfones, polyether ketones, polyimides or polyether imides. Additional to the textile product 901 as subject of the invention, the semifinished sheet 900 comprises additional layers of non metallic fibers 903 and 904, which have properties being chosen according to the needs of the semifinished sheet 900. as an example, such additional layers 903 and 904 are layers of unidirectional fibers, random oriented fiber mats, or a combination of layers of unidirectional fiber and random oriented fiber mats. Such layers may have a total fiber weight of 900 g/m², where the ratio of unidirectional fiber to random oriented fiber may vary from 300 g/m² unidirectional fiber and 600 g/m² random oriented fiber to 600 g/m² unidirectional fiber and 300 g/m² random oriented fiber.

## Claims

1. A textile product comprising at least one layer of non-metallic fibers, said textile product comprising metal cords, **characterized in that** said metal cords are bond to said at least one layer of non-metallic fibers by means of stitches.

2. A textile product according to claim 1, wherein said stitches are sewn or knitted through said at least one layer of non-metallic fibers.

3. A textile product according to any one of claims 1 to 2, wherein additional non-metallic fibers are linearly mixed with metal cords.

4. A textile product according to any one of claims 1 to 3, wherein said at least one layer of non-metallic fibers is a layer of essentially parallel non-metallic fibers.

5. A textile product according to any one of claims 1 to 4, wherein said at least one layer of non-metallic fibers comprises bundles of fiber roving or tapes of essentially parallel non-metallic fibers or tows of essentially parallel non-metallic fibers.

6. A textile product according to any one of claims 4 to 5, wherein said metal cords are crosswise bond to said bundles of fiber roving or tapes of essentially parallel non-metallic fibers or tows of essentially parallel non-metallic fibers.

7. A textile product according to claims 6, wherein the orientation of said metal cords in said textile product differs 90° from the orientation of said tapes of non-metallic fibers in said textile product.

8. A textile product according to any one of claim 1 to 7, wherein said textile product is a warp knitted fabric.

9. A textile product according to any one of claims 1 to 2, said at least one layer of non-metallic fibers being a woven, non-woven or knitted fabric.

10. A textile product according to any one of claims 1 to 9, wherein said metal cords are essentially parallel to each other.

11. A textile product according to any one of claims 1 to 9, wherein said metal cords consists in a first group and a second group, said metal cods of said first group are essentially parallel to each other, said metal cords of said second group being inclined over an angle **θ** in reference to said metal cords of said first group.

12. A textile product according to any one of claims 1 to 11, wherein said metal cords are steel cords.

13. A textile product according to any one of claims 1 to 12, wherein said non metallic fibers are glass fibers, poly-aramide fibers, poly(p-phenylene-2,6-benzobisoxazole) fibers, carbon fibers, basalt fibers, flax fibers, hemp fibers, mineral fibers or natural fibers .

14. A textile product according to any one of claims 1 to 13, wherein said non metallic fibers are mixed with polymer fibers out of polyolefins, polyamides, thermoplastic polyesters, polycarbonates, polyacetals, polysulfones, polyether ketones, polyimides or polyether imides.

15. A textile product according to any one of claims 1 to 14, wherein said stitches are made using a yarn comprising glass fibers, thermoplastic polyesters, poly-aramide fibers or poly(p-phenylene-2,6-benzobisoxazole) fibers.

16. A semifinished sheet comprising a polymer matrix and a textile product, said textile product comprising at least one layer of non-metallic fibers said textile product comprising metal cords, **characterized in that** said metal cords are bond to said at least one layer of non-metallic fibers by means of stitches.

17. A semifinished sheet according to claim 16, wherein said stitches are sewn or knitted through said at least one layer of non-metallic fibers.

18. A semifinished sheet according to any one of claims 16 to 17, wherein additional non-metallic fibers are linearly mixed with metal cords.

19. A semifinished sheet according to any one of claims 16 to 17, wherein said at least one layer of non-metallic fibers is a layer of essentially parallel non-metallic fibers.

20. A semifinished sheet according to any one of claims 16 to 19, wherein said at least one layer of non-metallic fibers comprises bundles of fiber roving or tapes of essentially parallel non-metallic fibers or tows of essentially parallel non-metallic fibers.

21. A semifinished sheet according to any one of claims 19 to 20, wherein said metal cords are crosswise bond to said bundles of fiber roving or tapes of essentially parallel non-metallic fibers or tows of essentially parallel non-metallic fibers.

22. A semifinished sheet according to claims 21, wherein the orientation of said metal cords in said textile product differs 90° from the orientation of said tapes of non-metallic fibers in said textile product.

23. A semifinished sheet according to any one of claim 16 to 22, wherein said textile product is a warp knitted fabric.

24. A semifinished sheet according to any one of claims 16 to 17, said at least one layer of non-metallic fibers being a woven, non-woven or knitted fabric.

25. A semifinished sheet according to any one of claims 16 to 24, wherein said metal cords are essentially parallel to each other.

26. A semifinished sheet according to any one of claims 16 to 24, wherein said metal cords consists in a first group and a second group, said metal cods of said first group are essentially parallel to each other, said metal cords of said second group being inclined over an angle **θ** in reference to said metal cords of said first group.

27. A semifinished sheet according to any one of claims 16 to 26, wherein said metal cords are steel cords.

28. A semifinished sheet according to any one of claims 16 to 27, wherein said non metallic fibers are are glass fibers, poly-aramide fibers, poly(p-phenylene-2,6-benzobisoxazole) fibers, carbon fibers, basalt fibers, flax fibers, hemp fibers, mineral fibers or natural fibers .

29. A semifinished sheet according to any one of claims 16 to 28, wherein said non metallic fibers are mixed with polymer fibers out of polyolefins, polyamides, thermoplastic polyesters, polycarbonates, polyacetals, polysulfones, polyether ketones, polyimides or polyether imides.

30. A semifinished sheet according to any one of claims 16 to 29, wherein said stitches are made using a yarn comprising glass fibers, poly-aramide fibers, poly(p-phenylene-2,6-benzobisoxazole) fibers or thermoplastic polyester fibers.

31. A method to produce a semifinished sheet comprising the steps of
• Providing a textile product as in claim 14;
• Providing a polymer matrix by using a melt extrusion
• Pressing said combination of the textile product and said polymer matrix during a double belt process for fully impregnate the metal and non-metal fibers.

32. A method to produce a semifinished sheet comprising the steps of
• Providing a textile product as in one of the claims 1 to 15
• Pressing the textile product in a double belt process.

33. A method to produce a semifinished sheet comprising as in one of the claims 31 to 32, comprising the additional steps of
• providing layers of random non-metal fibers prior to the pressing step.
